# EUROPÄISCHE PATENTSCHRIFT

(11) **EP 1 037 789 B1**
(45) Veröffentlichungstag und Bekanntmachung des Hinweises auf die Patenterteilung: **18.12.2002**
(21) Anmeldenummer: 99960788.0
(22) Anmeldetag: 14.10.1999
(51) Int. Cl.: B62B 3/14

(54) **EINKAUFSWAGEN**
SHOPPING CART
CHARIOT

(30) Priorität: 20.10.1998 DE 19848198; 25.06.1999 DE 19929135
(43) Veröffentlichungstag der Anmeldung: 27.09.2000
(73) Patentinhaber: WANZL METALLWARENFABRIK GMBH, D-89336 Leipheim (DE)
(72) Erfinder: ECKERT, Rainer, D-73230 Kirchheim/Teck (DE); MAATZ, Bernhard, D-86153 Augsburg (DE)
(86) Internationale Anmeldenummer: DE9903335
(87) Internationale Veröffentlichungsnummer: WO00023311

(56) Entgegenhaltungen:
- WO-A-99/50564
- DE-A- 3 133 276
- US-A- 3 782 747
- US-A- 4 761 904
- US-A- 4 773 175

## Beschreibung

Die Erfindung betrifft einen Einkaufswagen mit einem Kindersitz, der zumindest mit einem Sitz und einer Rückenlehne ausgestattet ist, welche Stäbe aufweist, wobei sich an der Rückenlehne eine mit wenigstens zwei Halteelementen ausgestattete und wenigstens ein Zwischenstück aufweisende Informationseinrichtung befindet, die zum Tragen von zumindest einem plakatartigen Informationsträger bestimmt ist und die Halteelemente zum Umgreifen von Stäben der Rückenlehne vorgesehen sind und wobei die Rückenlehne eine Öffnung besitzt, die durch zwei vertikale Stäbe und durch einen oberen und einen unteren horizontalen Stab begrenzt und durch die Informationseinrichtung zumindest teilweise bedeckt ist.

Ein Einkaufswagen dieser Art ist in der US-Patentschrift 2,890,057 beschrieben. An der Rückenlehne dieses Einkaufswagens ist wenigstens eine in Form einer simplen Blechplatte gestaltete Informationseinrichtung angeordnet, wobei die Blechplatte an vertikalen Stäben der Rückenlehne angeschweißt ist. Die Blechplatte kann, als Informationsträger vorgesehen, beschriftet oder mit Informationen beklebt werden. Es ist bekannt, dass zum Anschweißen einer Blechplatte an aus Draht bestehenden Stäben ein erhöhter Fertigungsaufwand notwendig ist. Die Blechplatte muss z.B. mit mindestens einer Sicke ausgestattet werden, damit sie überhaupt mittels Punktschweißung an den Stäben angeschweißt werden kann.

Durch die US-Patentschrift 3,782,747 ist ein Einkaufswagen bekannt, der ebenfalls zur Gattung der hier vorliegenden Einkaufswagen gerechnet werden kann. Die Informationseinrichtung dieses Einkaufswagens ist durch ein Werbeplakat gebildet, das oben und unten mit Vorsprüngen ausgestattet ist, die um je einen horizontalen Stab der Rückenlehne gebogen und anschließend zusätzlich gegen Lösen gesichert werden. Die so gestaltete Informationseinrichtung liegt an den Stäben der Rückenlehne an. Sie ist kompliziert in der Herstellung bzw. lässt beim Herstellvorgang relativ viel Abfall entstehen und ist nur in umständlicher Weise an der Rückenlehne befestigbar.

Die DE 39 32 593 C2 beschreibt einen in seiner Hauptebene geteilten Informationsträgerrahmen für Warenkörbe aus Gitterstäben. Dieser Informationsträgerrahmen wird an der Stirnseite des Korbes eines Einkaufswagens so angebracht, dass sich eine Hälfte des Informationsträgerrahmens an der Außenseite und die andere Hälfte an der Innenseite der Stirnseite des Korbes befinden. Die beiden Hälften sind durch Rastelemente miteinander verbunden, wobei zwischen den beiden Hälften des Informationsträgerrahmens die Gitterstäbe der Stirnwand hindurchgeführt sind. In jeder der Hälften lässt sich ein plakatartiger Informationsträger einfügen oder zum Zwecke des Austausches auch wieder entnehmen. Der aus zwei Hälften bestehende Informationsträgerrahmen baut sehr stark auf, da sich die Gitterstäbe der Stirnseite des Korbes zwischen den beiden Hälften befinden. Dies kann als nachteilig gewertet werden.

Es ist Aufgabe der Erfindung, einen Einkaufswagen der hier vorliegenden Art so weiterzuentwickeln, dass eine Informationseinrichtung auf einfache Art und ohne Notwendigkeit eines Schweißvorgangs an der Rückenlehne des Einkaufswagens angebracht werden kann und dass die Gitterstäbe der Rückenlehne nicht störend im Wege stehen.

Die Lösung der Aufgabe besteht darin, dass das wenigstens eine Zwischenstück zusammen mit dem Informationsträger zwischen den beiden vertikalen Stäben der Öffnung angeordnet ist und dass die Halteelemente im Bereich der Öffnung an Stäben der Rückenlehne befestigt sind.

Die Informationseinrichtung lässt sich schnappschlüssig auf die Rückenlehne aufsetzen, so dass keine aufwendigen Befestigungsverfahren erforderlich sind. Sie wird von keinen Gitterstäben durchquert, so dass sie relativ dünn gehalten werden kann und somit nicht aufbaut.

Das Zwischenstück der Informationseinrichtung befindet sich bevorzugt innerhalb des von der Seite betrachteten Grundrisses der vertikalen Stäbe der Rückenlehne. Dadurch behält die Rückenlehne ihren Charakter als solche bei. Ein Anlehnen ist auf bequeme Weise möglich, da das so angeordnete Zwischenstück keine hinderlichen Erhöhungen, Vorsprünge oder dergleichen entstehen lässt.
Die Einrichtung zur Aufnahme eines Informationsträgers ist bevorzugt taschenförmig oder als Nut gestaltet. Dadurch ist ein bequemes Auswechseln von bevorzugt tafel- oder plakatartigen Informationsträgern möglich, ohne dass die Informationseinrichtung von der Rückenlehne abgenommen werden braucht.

Die Erfindung wird anhand von Ausführungsbeispielen näher erläutert. Es zeigt
- Fig. 1: einen mit einem Kindersitz und einer Informationseinrichtung ausgestatteten Einkaufswagen;
- Fig. 2: einen Schnitt durch eine Rückenlehne im Bereich einer aus drei Teilen bestehenden Informationseinrichtung;
- Fig. 3: den Querschnitt eines Halteprofiles;
- Fig. 4: einen Schnitt durch eine einstückig gestaltete Informationseinrichtung;
- Fig. 5: eine Informationseinrichtung in Anlehnung an Fig. 4 in auf die Stäbe der Rückenlehne aufgesetztem Zustand sowie
- Fig. 6: und 7 zwei weitere Varianten.

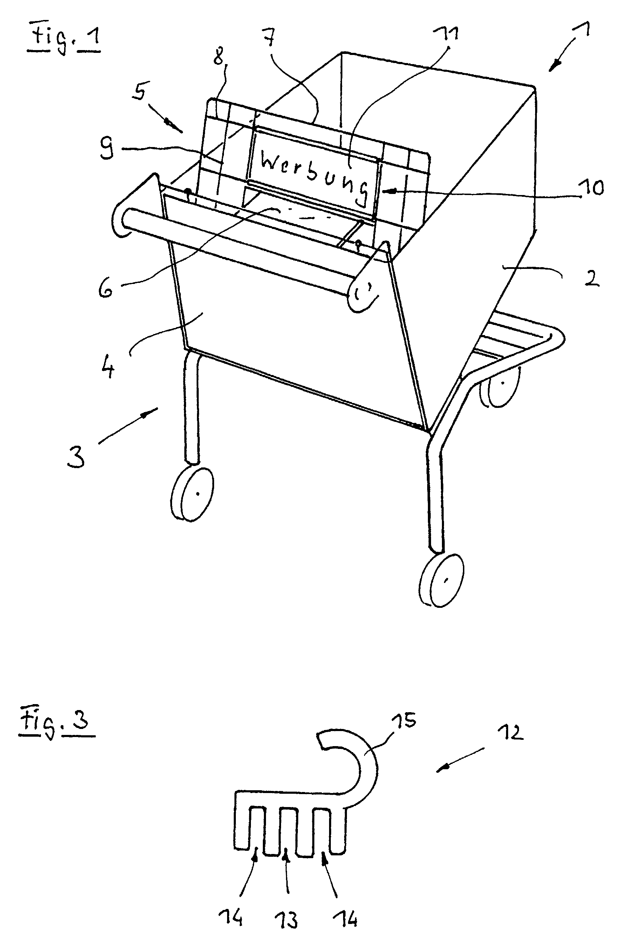

Fig. 1 zeigt einen mit einem Kindersitz 5 ausgestatteten Einkaufswagen 1. Die Form des üblicherweise mit weiteren Wagen stapelbaren Einkaufswagens 1 ist im Grunde unerheblich. Wichtig ist, dass der Kindersitz 5 des Einkaufswagens 1 zumindest einen Sitz 6 und eine Rückenlehne 7 zum Transportieren eines Kindes aufweist. Die Rückenlehne 7 weist horizontale und vertikale Stäbe 8, 9 auf. An der Rückenlehne 7 ist eine flächige Informationseinrichtung 11 angeordnet, die dem Benutzer des Einkaufswagens 1 Informationen vermitteln soll. Die Rückenlehne 7 weist eine Öffnung 10 auf, die durch die Informationseinrichtung 11 zumindest teilweise bedeckt ist. Zum Kindersitz 5 gehört im Beispiel auch eine Rückwand 4, welche die Rückseite 3 des Korbes 2 des Einkaufswagens 1 verschließt. Gewöhnlich sind die Rückwand 4, der Sitz 6 und die Rückenlehne 7 in bekannter Weise gegeneinander beweglich so verbunden, dass sich der so gestaltete Kindersitz 5 zu einem flachen, raumsparenden Paket zusammenfalten lässt.

Fig. 2 zeigt einen Teil der Rückenlehne 7 in einer Schnittdarstellung in Gebrauchslage. Die Rückenlehne 7 ist ein flächiges Gebilde, das zum größten Teil aus sich kreuzenden Stäben 8, 9 besteht. Die Öffnung 10 in der Rükkenlehne 7 wird oben durch einen oberen horizontalen Stab 8a, nach unten durch einen unteren horizontalen Stab 8b und zu den beiden Seiten von je einem vertikalen Stab 9 begrenzt. Die Öffnung 10 besitzt eine rechteckige oder quadratische Form. Die an der Öffnung 10 angeordnete Informationseinrichtung 11 weist zwei längs verlaufende Halteelemente 12 auf, die auf den oberen und auf den unteren horizontalen Stab 8a, 8b rastschlüssig aufgesetzt sind. Zur Informationseinrichtung 11 gehört auch ein bevorzugt aus Blech gebildetes Zwischenstück 16. Das Zwischenstück 16 wird von den Halteprofilen 12 getragen. Zu diesem Zweck weist jedes Halteelement 12 eine Nut 13 auf, in welche der obere und der untere Rand 17, 18 des Zwischenstückes 16 eingefügt ist. Die Halteelemente 12 und deren Nuten 13 sind so angeordnet, dass sich das Zwischenstück 16 innerhalb des von der Seite betrachteten Grundrisses 20 der vertikalen Stäbe 9 befindet. Die Halteelemente 12 weisen wenigstens eine weitere Nut 14 auf, die eine Einrichtung zur auswechselbaren Aufnahme eines flächigen, plakatartigen Informationsträgers 19 bildet. Die Halteelemente 12 sind gegeneinander gerichtet oder spiegelbildlich zueinander an der Rückenlehne 7 angeordnet. Die Informationseinrichtung 11 ist somit aus drei Teilen, nämlich aus zwei Halteelementen 12 und einem Zwischenstück 16 gebildet.

Fig. 3 zeigt den Querschnitt eines Halteelementes 12. Die Halteelemente 12 liegen in stabartiger Form vor. Jedes Halteelement 12 weist einen gekrümmten Abschnitt 15 auf, der zum rastschlüssigen Ergreifen eines horizontalen Stabes 8a oder 8b bestimmt ist. An den Abschnitt 15 schließen drei Nuten 13, 14 an. Die Nut 13 ist für die Aufnahme der Zwischenplatte 16 bestimmt, während die beiden anderen Nuten 14, rechts und links von der Nut 13 angeordnet, jeweils eine Einrichtung zur Aufnahme je eines Informationsträgers 19 bilden. Anstelle von zwei Nuten 14 kann auch nur eine Nut 14 vorgesehen sein. Das Zwischenstück 16 und der wenigstens eine Informationsträger 19 befinden sich zwischen den beiden vertikalen Stäben 9, die die seitlichen Begrenzungen der Öffnung 10 bilden.

Während in den Ausführungen zu Fig. 2 und 3 eine aus drei Teilen bestehende Informationseinrichtung 11 beschrieben wurde, zeigen die nachfolgenden Figuren 4 bis 7 einstückig gestaltete Informationseinrichtungen 11.

Die in Fig. 4 im Schnitt dargestellte Informationseinrichtung 11 weist ein an die beiden Halteelemente 12 angeformtes Zwischenstück 16 auf. Die Informationseinrichtung 11 ist als einstückiges Kunststoffteil gestaltet. Die Informationseinrichtung 11 besitzt wenigstens zwei Nuten 14 zur Aufnahme von mindestens einem Informationsträger 19. Wird die Informationseinrichtung 11 im Bereich der Öffnung 10 der Rückenlehne 7 mit Hilfe der Halteelemente 12 auf die Stäbe 8a und 8b aufgesetzt, befinden sich Teile der Halteelemente 12 sowie das Zwischenstück 16 innerhalb des von der Seite betrachteten Grundrisses der vertikalen Stäbe 9. Die Öffnung 10 der Rückenlehne 7 ist durch die Informationseinrichtung 11 zumindest teilweise bedeckt. Der wenigstens eine Informationsträger 19 kann durch leichtes Verbiegen von vorne und/oder von hinten in die Nuten 14 der Informationseinrichtung 11 eingefügt werden. Die an den Stäben 8a und 8b befindlichen Halteelemente 12 können zu den Stäben 9 weitergeführt und an diesen ebenfalls rastschlüssig befestigt sein.

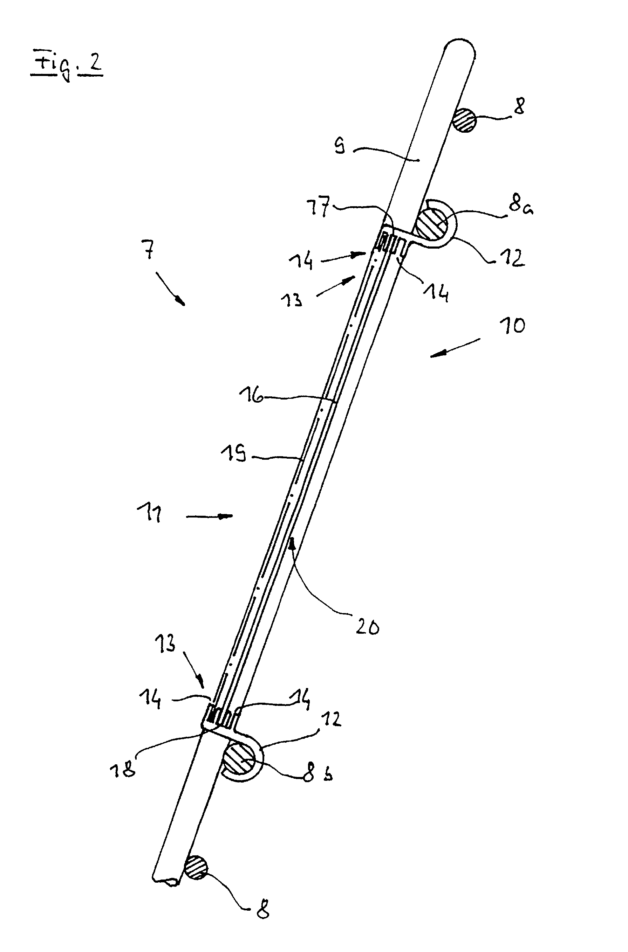

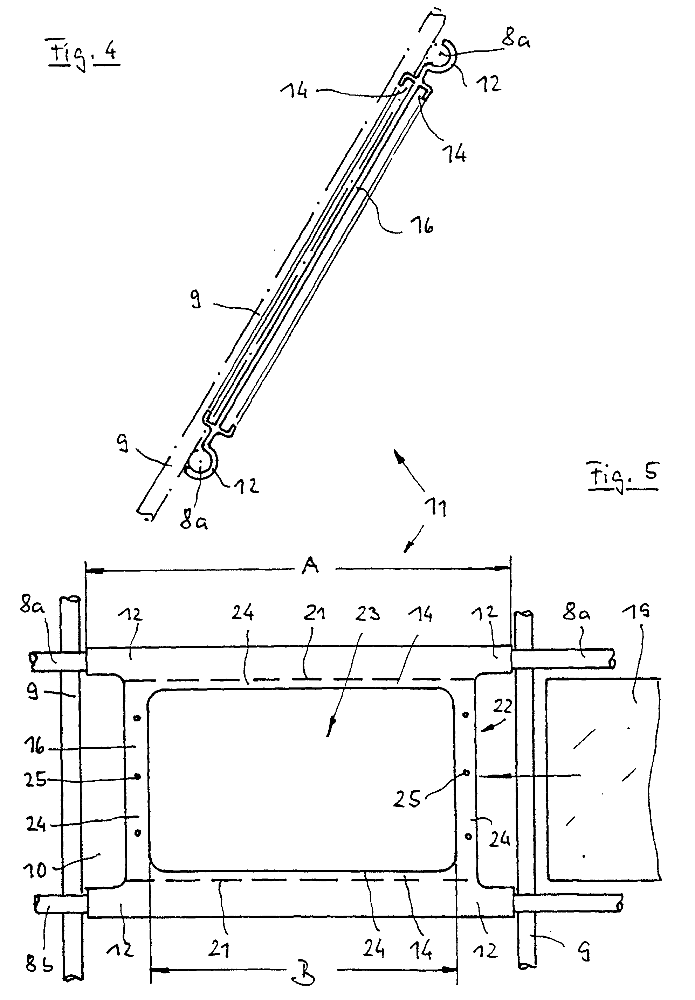

Fig. 5 zeigt in einer Vorderansicht eine Informationseinrichtung 11, wie sie größtenteils in Fig. 4 beschrieben ist. Allerdings befinden sich hier die Nuten 14 zur Aufnahme von wenigstens einem Informationsträger 19 nicht an den Halteelementen 12, sondern am Zwischenstück 16. Die in der Zeichnung dargestellten gestrichelten Linien 21 zeigen eine von wenigstens einer Seite des Zwischenstückes 16 aus zugängliche Nut 22, die zur Aufnahme eines plakatartigen Informationsträger 19 bestimmt ist. Die so gestaltete taschenartige Einrichtung kann zu beiden Seiten einer Zwischenwand 23 vorgesehen sein, die zur Bildung des Zwischenstückes 16 beiträgt. Ebenfalls auf mindestens einer der beiden Seiten (Vorder- und Rückseite) ist am Zwischenstück 16 eine Umrandung 24 vorgesehen, die wie ein Fenster oder wie ein Bilderrahmen wirkt, um so den Blick auf einen von der Einrichtung getragenen Informationsträger 19 freizugeben. Die am Zwischenstück 16 angeformten Halteelemente 12 umgreifen rastschlüssig die beiden horizontalen Stäbe 8a und 8b, welche einen Teil der Umrandung der Öffnung 10 bilden. Im Beispiel ist die Breite A der Halteelemente 12 größer als die Breite B des Zwischenstückes 16. In der Zeichnung ist ein plakatartiger Informationsträger 19 dargestellt, wobei der eingezeichnete Pfeil verdeutlichen soll, dass der Informationsträger 19 von der Seite aus in die Nuten 14 der taschenartigen Einrichtung einschiebbar ist. Am Zwischenstück 16 können horizontal angeordnete Durchbrüche 25 vorgesehen sein, die dazu dienen, geeignete Sicherungsmittel aufzunehmen, mit deren Hilfe sich ein Informationsträger 19 an der Informationseinrichtung 11 unverlierbar befestigen lässt.

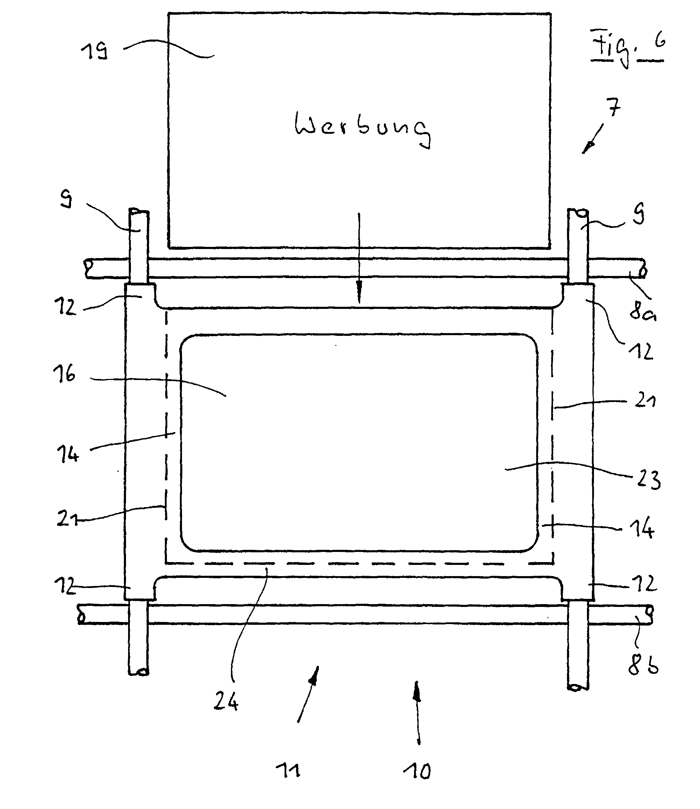

Bei der in Fig. 6 dargestellten Informationseinrichtung 11 sind die Halteelemente 12 senkrecht angeordnet und umgreifen rastschlüssig zwei vertikale Stäbe 9, die wiederum einen Teil der Öffnung 10 bilden. Die Öffnung 10 der Rückenlehne 7 ist durch die Informationseinrichtung 11 zumindest teilweise bedeckt. Bei allen hier beschriebenen Ausführungsbeispielen ist es jedoch durchaus möglich, die Informationseinrichtung 11 so groß zu gestalten, dass die Öffnung 10 vollständig bedeckt ist. Der eingezeichnete Pfeil verdeutlicht, dass ein Informationsträger 19 von oben her in die Nuten 14 der taschenartigen Einrichtung einsetzbar ist.

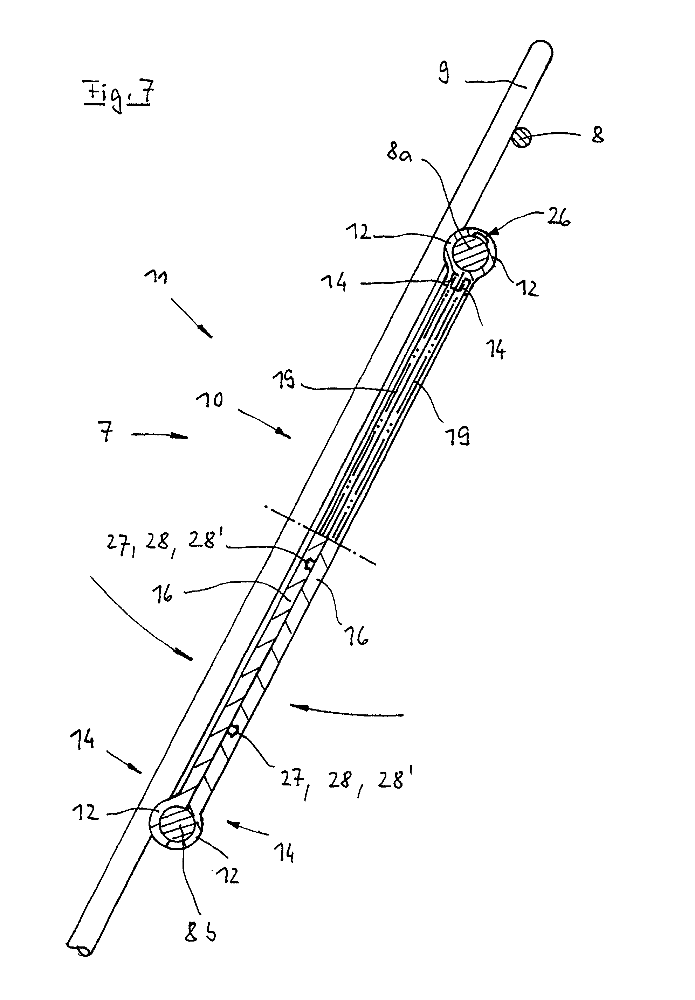

Fig. 7 zeigt zweifach geschnitten eine einstückige Informationseinrichtung 11 mit zwei Zwischenstücken 16 und vier Halteelementen 12. Zwei der jeweils benachbarten Halteelemente 12 sind durch wenigstens ein Filmscharnier 26 verbunden. Die beiden Zwischenstücke 16 besitzen korrespondierende Rastelemente 27 in Form von Zapfen 28 und Durchbrüchen 28', in welchen sich die Zapfen 28 verankern lassen. Jedes Zwischenstück 16 weist oben und unten eine Nut 14 auf, deren Öffnungen zueinander gerichtet sind, so dass wieder eine Einrichtung zur Aufnahme je eines flächigen, plakatartigen Informationsträgers 19 gebildet ist. Die Rastelemente 27 liegen außerhalb jener Bereiche, welche die Informationsträger 19 beanspruchen. Die aus Kunststoff gefertigte Informationseinrichtung 11 fällt beim Herstellungsvorgang als ebenes Teil an. Die beiden Zwischenstücke 16 sind, zwei der vier Halteelemente 12 mit einbezogen, über das Filmscharnier 26 verbunden. Dadurch ist es möglich, dass die beiden Zwischenstücke 16 aufeinander zubewegt werden können. Diesen Umstand macht man sich bei der Montage der Informationseinrichtung 11 zu Nutze. Der Informationsträger 19 wird, indem man das Filmscharnier 26 als Gelenk benützt, so gebogen, dass sich die Zwischenstücke 16 und die nicht durch ein Filmscharnier 26 verbundenen Halteelemente 12 einander nähern. Die Informationseinrichtung 11 nimmt dabei eine V-förmige Gestalt ein. Derart gespreizt wird die Informationseinrichtung mit jenen Halteelementen 12, die durch das Filmscharnier 26 verbunden sind, auf den oberen horizontalen Stab 8a gesetzt. Anschließend werden die beiden unteren Halteelemente 12 auf den unteren horizontalen Stab 8b gedrückt, so dass die Rastelemente 27 zueinander finden und gegenseitig verrasten, siehe die beiden Pfeile. Die Informationseinrichtung 11 sitzt nun ortsfest und arretiert auf der Rückenlehne 7. Sie (11) bedeckt zumindest teilweise die Öffnung 10. Die Informationseinrichtung 11 kann auch um 90° gedreht, in gleicher Weise auf die beiden vertikalen Stäbe 9 aufgesetzt werden. Alle weiteren, bei diesem Ausführungsbeispiel anwendbaren, technischen Merkmale, die hier nicht ausdrücklich genannt sind, lassen sich für den Fachmann aus der Beschreibung für die Figuren 1 bis 6 entnehmen und variieren.

## Patentansprüche

1. Einkaufswagen (1) mit einem Kindersitz (5), der zumindest mit einem Sitz (6) und einer Rückenlehne (7) ausgestattet ist, welche Stäbe aufweist, wobei sich an der Rückenlehne (7) eine mit wenigstens zwei Halteelementen (12) ausgestattete und wenigstens ein Zwischenstück (16) aufweisende Informationseinrichtung (11) befindet, die zum Tragen von zumindest einem plakatartigen Informationsträger (19) bestimmt ist und die Halteelemente zum Umgreifen von Stäben der Rückenlehne (7) vorgesehen sind und wobei die Rückenlehne (7) eine Öffnung (10) besitzt, die durch zwei vertikale Stäbe (9) und durch einen oberen und einen unteren horizontalen Stab (8a und 8b) begrenzt und durch die Informationseinrichtung (11) zumindest teilweise bedeckt ist, **dadurch gekennzeichnet, dass** das wenigstens eine Zwischenstück (16) zusammen mit dem Informationsträger (19) zwischen den beiden vertikalen Stäben (9) angeordnet ist und dass die Halteelemente (12) im Bereich der Öffnung (10) an den horizontalen Stäben (8a, 8b) und/oder an den vertikalen Stäben (9) befestigt sind.

2. Einkaufswagen nach Anspruch 1, **dadurch gekennzeichnet, dass** die Breite der Halteelemente (12) größer ist als die Breite des wenigstens einen Zwischenstückes (16).

3. Einkaufswagen nach Anspruch 1 oder 2, **dadurch gekennzeichnet, dass** sich das wenigstens eine Zwischenstück (16) innerhalb des von der Seite betrachteten Grundrisses der vertikalen Stäbe befindet.

4. Einkaufswagen nach einem der Ansprüche 1 bis 3, **dadurch gekennzeichnet, dass** der wenigstens eine Informationsträger (19) von den Halteelementen (12) getragen wird.

5. Einkaufswagen nach einem der Ansprüche 1 bis 3, **dadurch gekennzeichnet, dass** der wenigstens eine Informationsträger (19) vom wenigstens einen Zwischenstück (16) getragen wird.

6. Einkaufswagen nach einem der Ansprüche 1 bis 5, **dadurch gekennzeichnet, dass** zwei Zwischenstücke (16) vorgesehen sind, die im Bereich zweier Halteelemente (12) durch wenigstens ein Filmscharnier (26) verbunden sind.

7. Einkaufswagen nach einem der Ansprüche 1 bis 6, **dadurch gekennzeichnet, dass** bei Verwendung von zwei Zwischenstücken (16) die Zwischenstücke (16) durch Rastelemente (27) verbindbar sind.

8. Einkaufswagen nach einem der Ansprüche 1 bis 7, **dadurch gekennzeichnet, dass** die Informationseinrichtung (11) so gestaltet ist, dass der wenigstens eine Informationsträger (19) entweder von oben oder von einer Seite oder von vorne und/oder von hinten in die Informationseinrichtung (11) einsetzbar ist.

9. Einkaufswagen nach einem der Ansprüche 1 bis 8, **dadurch gekennzeichnet, dass** am wenigstens einen Zwischenstück (16) horizontale Durchbrüche (25) zur Aufnahme von Sicherungsmitteln vorgesehen sind, mit deren Hilfe der mindestens eine Informationsträger (19) an der Informationseinrichtung (11) befestigbar ist.

## Claims

1. A shopping trolley (1) with a child seat (5) at least comprising a seat (6) and a backrest (7) provided with bars, wherein an information arrangement (11) provided with at least two holding members (12) and having at least one intermediate part (16) is located on the backrest (7) and is intended to carry at least one placard-type information carrier (19), and the holding members are intended to engage round bars of the backrest (7), and wherein the backrest (7) has an opening (10) defined by two vertical bars (9) and by an upper and a lower horizontal bar (8a and 8b) and at least partly covered by the information arrangement (11), **characterised in that** the at least one intermediate part (16) is arranged between the two vertical bars (9) together with the information carrier (19) and **in that** the holding members (12) are fixed to the horizontal bars (8a, 8b) and/or to the vertical bars (9) in the region of the opening (10).

2. A shopping trolley according to claim 1, **characterised in that** the width of the holding members (12) is greater than the width of the at least one intermediate part (16).

3. A shopping trolley according to claim 1 or 2, **characterised in that** the at least one intermediate part (16) is located within the outline of the vertical bars when viewed from the side.

4. A shopping trolley according to any one of claims 1 to 3, **characterised in that** the at least one information carrier (19) is carried by the holding members (12).

5. A shopping trolley according to any one of claims 1 to 3, **characterised in that** the at least one information carrier (19) is carried by the at least one intermediate part (16).

6. A shopping trolley according to any one of claims 1 to 5, **characterised in that** two intermediate parts (16) are provided and are connected in the region of two holding members (12) by at least one integral hinge (26).

7. A shopping trolley according to any one of claims 1 to 6, **characterised in that**, when two intermediate parts (16) are used, they are connectable by locking members (27).

8. A shopping trolley according to any one of claims 1 to 7, **characterised in that** the information arrangement (11) is constructed so that the at least one information carrier (19) is insertable into the information arrangement (11) either from above or from one side or from the front and/or from the back.

9. A shopping trolley according to any one of claims 1 to 8, **characterised in that** horizontal openings (25) for receiving securing means are provided in the at least one intermediate part (16), the at least one information carrier (19) being fixable to the information arrangement (11) by the securing means.

## Revendications

1. Chariot à provisions (1) muni d'un siège d'enfant (5) équipé d'au moins une assise (6) et d'un dossier (7) présentant des barreaux, ledit dossier (7) comportant un dispositif d'information (11) pourvu d'au moins deux éléments de retenue (12), doté d'au moins une pièce intermédiaire (16) et destiné à porter au moins un support d'informations (19) du type affiche, les éléments de retenue étant prévus pour ceinturer des barreaux du dossier (7), et ledit dossier (7) comportant une ouverture (10) qui est délimitée par deux barreaux verticaux (9) et par des barreaux horizontaux supérieur et inférieur (8a et 8b), et est au moins partiellement recouverte par le dispositif d'information (11), **caractérisé par le fait que** la pièce intermédiaire (16), prévue au minimum, est interposée entre les deux barreaux verticaux (9) conjointement au support d'informations (19) ; et **par le fait que** les éléments de retenue (12) sont fixés, dans la région de l'ouverture (10), aux barreaux horizontaux (8a, 8b) et/ou aux barreaux verticaux (9).

2. Chariot à provisions selon la revendication 1, **caractérisé par le fait que** la largeur des éléments de retenue (12) est plus grande que la largeur de la pièce intermédiaire (16) prévue au minimum.

3. Chariot à provisions selon la revendication 1 ou 2, **caractérisé par le fait que** la pièce intermédiaire (16) prévue au minimum se trouve à l'intérieur de la configuration de base des barreaux verticaux, observée par le côté.

4. Chariot à provisions selon l'une des revendications 1 à 3, **caractérisé par le fait que** le support d'informations (19), prévu au minimum, est porté par les éléments de retenue (12).

5. Chariot à provisions selon l'une des revendications 1 à 3, **caractérisé par le fait que** le support d'informations (19), prévu au minimum, est porté par la pièce intermédiaire (16) prévue au minimum.

6. Chariot à provisions selon l'une des revendications 1 à 5, **caractérisé par** la présence de deux pièces intermédiaires (16) solidarisées, dans la région de deux éléments de retenue (12), par au moins une charnière pelliculaire (26).

7. Chariot à provisions selon l'une des revendications 1 à 6, **caractérisé par le fait que**, lorsqu'on utilise deux pièces intermédiaires (16), lesdites pièces intermédiaires (16) peuvent être solidarisées par des éléments d'encliquetage (27).

8. Chariot à provisions selon l'une des revendications 1 à 7, **caractérisé par le fait que** le dispositif d'information (11) est configuré de façon telle que le support d'informations (19), prévu au minimum, puisse être inséré dans le dispositif d'information (11) soit de haut en bas, soit à partir d'un côté, soit depuis l'avant et/ou depuis l'arrière.

9. Chariot à provisions selon l'une des revendications 1 à 8, **caractérisé par** la présence, sur la pièce intermédiaire (16) prévue au minimum, de perforations horizontales (25) destinées à recevoir des moyens d'arrêt à l'aide desquels le support d'informations (19), prévu au minimum, peut être fixé au dispositif d'information (11).
